(19) Europäisches Patentamt
European Patent Office
Office européen des brevets

(11) **EP 1 596 503 B1**

(12) **FASCICULE DE BREVET EUROPEEN**

(45) Date de publication et mention
de la délivrance du brevet:
**09.01.2013 Bulletin 2013/02**

(51) Int Cl.:
***H04B 1/12*** *(2006.01)* ***H04B 1/707*** *(2011.01)*

(21) Numéro de dépôt: **05290834.0**

(22) Date de dépôt: **15.04.2005**

(54) **Dispositif et procédé rejecteurs de brouilleur de signal à spectre étale**

Verfahren und Vorrichtung zur Interferenzunterdrückung eines Spreizspektrumsignals

Device and method for rejecting interference in a spread spectrum signal

(84) Etats contractants désignés:
**DE ES FR GB IT**

(30) Priorité: **21.04.2004 FR 0404218**

(43) Date de publication de la demande:
**16.11.2005 Bulletin 2005/46**

(73) Titulaire: **Sagem Défense Sécurité**
**75015 Paris (FR)**

(72) Inventeur: **Chaminadas, Francis**
**78340 Les Clayes sous Bois (FR)**

(74) Mandataire: **Regimbeau**
**20, rue de Chazelles**
**75847 Paris Cedex 17 (FR)**

(56) Documents cités:
**EP-A- 1 341 355 WO-A-00/25436**
**US-A- 4 475 214**

## Description

DOMAINE TECHNIQUE GENERAL

La présente invention concerne un procédé et un dispositif de réjection d'un signal de brouillage d'un signal à spectre étalé.

Plus précisément mais non limitativement, elle concerne un procédé et un dispositif de réjection d'un brouilleur d'un signal d'un système mondial de positionnement ou « Global Positioning System (GPS) » selon la terminologie anglo-saxonne généralement utilisée par l'homme du métier.

ETAT DE L'ART

On connaît de nombreux signaux dont la transmission s'effectue avec un étalement du spectre, notamment par une séquence directe semi-aléatoire.

C'est le cas notamment des signaux de téléphonie mobile de troisième génération ou « Universal Mobile Télécommunication System (UMTS) », ou encore des signaux d'un système mondial de positionnement ou « Global Positioning System (GPS) ».

La présente description s'attache à décrire un procédé et un dispositif de réjection d'un brouilleur d'un signal GPS, mais un tel procédé et un tel dispositif s'appliquent à n'importe quel brouilleur d'un signal à spectre étalé par une séquence directe semi-aléatoire.

La technique du GPS est connue de l'homme du métier. Le GPS est un système de radiorepérage qui détermine la position d'un véhicule ou d'un appareil mobile, en se servant d'une constellation de satellites en orbite autour de la Terre. Les signaux émis par les satellites, généralement au nombre de 24, sont captés par un appareil récepteur installé dans le mobile. Le système détermine par triangulation la position du mobile, à l'aide de données géographiques informatisées, en fonction du temps et de la distance parcourue par un des satellites en orbite.

On voit donc que le temps est une donnée fondamentale dans la technique GPS. On mesure en effet notamment un temps de propagation d'un signal à partir d'un satellite, et on mesure également des temps de retard. C'est pourquoi il faut au moins quatre satellites pour pouvoir effectuer un positionnement. Trois desdits satellites sont utilisés pour le positionnement par la triangulation, et un est utilisé comme référence de temps.

La technique d'étalement de spectre pour transmettre les signaux GPS est également connue. Elle consiste à transmettre le signal GPS sous forme d'une succession de bribes ou « chips » en anglais. Dans une transmission à étalement du spectre en général, une bribe est une partie du signal émise avec des caractéristiques distinctes de celles des autres parties, selon des règles déterminées. Ainsi le signal GPS est constitué d'une succession de « 0 » et de « 1 » matérialisée grâce à une modulation de phase du signal, par exemple une alternance de bribes déphasées de π radians. L'alternance des bribes dans le signal est semi-aléatoire. Chaque bribe dure environ 1 μs par exemple pour le signal pour les applications civiles.

La technique d'étalement de spectre apporte par principe une protection vis à vis de certains brouilleurs ou interférences. C'est le cas notamment des brouilleurs ou interférences de type à onde entretenue - ou « continuous wave (CW) » en anglais - ou des interférences à bande étroite - de l'ordre de 100 kHz. Le fait que le spectre soit étalé par rapport à un brouilleur ou une interférence de bande étroite induit un brouillage moins important du spectre. C'est pour cette raison que le GPS ayant des applications civiles présente un spectre étalé sur 2 MHz et le GPS ayant des applications militaires présente un spectre étalé sur 20 MHz. Le GPS militaire est plus protégé. De plus, le signal militaire est crypté.

Cependant, le niveau des signaux GPS reçus par l'appareil récepteur est très faible. Il est toujours très inférieur au niveau du bruit thermique du récepteur. De ce fait, des signaux parasites, même de très faible niveau, sont gênants et empêchent le traitement GPS par l'appareil récepteur.

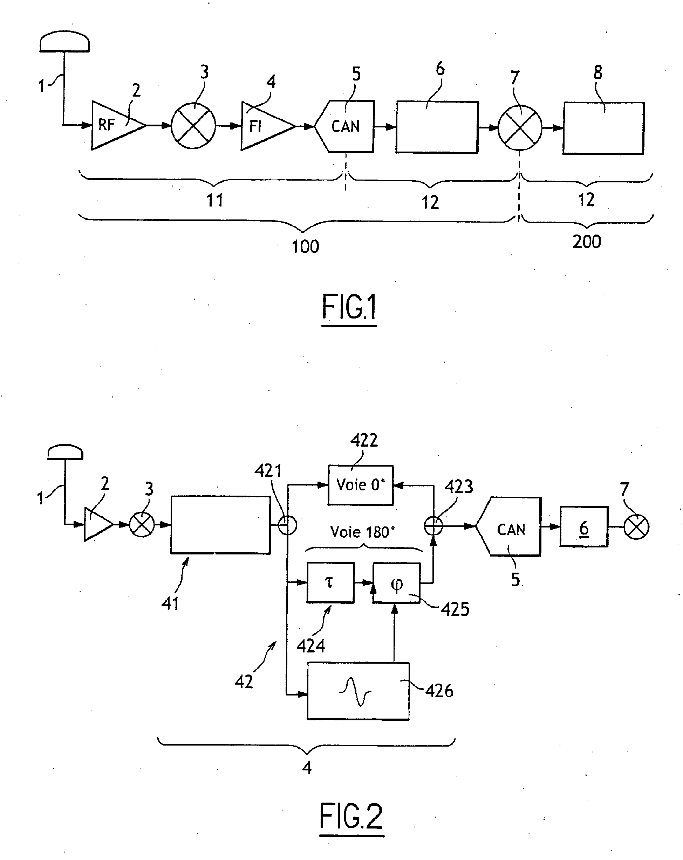

La figure 1 représente schématiquement un appareil récepteur d'un signal GPS.

Un récepteur comporte classiquement une antenne 1 de réception des signaux GPS en provenance des satellites. L'antenne 1 est reliée à un amplificateur 2 de radiofréquences RF. La sortie de l'amplificateur 2 est reliée à un mélangeur 3 dont la sortie est elle-même reliée à un amplificateur 4 de fréquences intermédiaires FI. Le mélangeur 3 est un dispositif qui, lorsqu'il reçoit à son entrée deux oscillations électriques de fréquences différentes, délivre à la sortie une oscillation dont la fréquence est une combinaison linéaire de celles des oscillations entrantes. On abaisse ainsi les fréquences dans l'appareil du domaine des radiofréquences - de l'ordre du GHz, 1575 MHz par exemple - au domaine des fréquences intermédiaires - de l'ordre de 200 MHz.

La partie de l'appareil constituée de l'antenne 1, du mélangeur 3 et des deux amplificateurs 2 et 4 constitue une première partie 11 dont les signaux sont analogiques.

La sortie de l'amplificateur 4 est reliée à un convertisseur analogique/numérique 5 dont le signal de sortie est délivré à un filtre 6. La sortie du filtre 6 est reliée quant à elle à un corrélateur 7.

Ainsi, on définit une partie pré-corrélation 100 constituée des éléments 1, 2, 3, 4, 5 et 6 situés en amont du corrélateur 7.

Un corrélateur est classiquement un dispositif mesurant la cohérence entre deux formes d'ondes afin de détecter des signaux faibles perdus dans le bruit. Ainsi, le corrélateur 7 de l'appareil effectue un désétalement du spectre en effectuant une corrélation entre le signal GPS arrivant du filtre 6 et un signal GPS estimé connu par l'appareil, pour pouvoir effectuer ensuite un traitement sur le signal GPS et déterminer un positionnement de l'appareil.

Ainsi, la sortie du corrélateur 7 est reliée à un dispositif 8 de traitement. Le dispositif 8 constitue alors la partie post-corrélation 200.

Bien entendu, les dispositifs 6, 7 et 8 échangent des signaux sous forme numérique 12, puisqu'ils sont placés en aval du convertisseur 5.

Deux techniques sont couramment employées dans l'art antérieur pour atténuer l'influence des signaux parasites sur le signal GPS arrivant au récepteur.

La première technique est une technique de traitement pré-corrélation et s'applique donc à la partie référencée par 100 sur la figure 1.

Le traitement de pré-corrélation peut par conséquent lui-même concerner l'antenne 1, l'amplificateur 2 de radiofréquences RF ou l'amplificateur 4 de fréquences intermédiaires FI, ou encore s'appliquer au signal FI numérisé par le convertisseur analogique numérique 5 de la figure 1.

Un traitement de pré-corrélation concernant l'antenne 1 peut être effectué par une réjection spatiale, en créant au moins un trou dans le diagramme de rayonnement de l'antenne en direction du brouilleur. La modification du diagramme de rayonnement s'effectue grâce à des composants effectuant des pondérations de réception. Ainsi, l'antenne 1 reçoit mal dans la direction du brouilleur et n'est plus omnidirectionnelle.

La conception d'une telle antenne à diagramme de rayonnement modifié est cependant difficile et onéreuse.

Un traitement de pré-corrélation concernant les amplificateurs 2 ou 4 peut être effectué par un filtrage analogique par introduction d'un réjecteur de fréquences. Le réjecteur rejette alors la fréquence de brouillage.

Un tel réjecteur est difficile à mettre en place dans le cas d'un brouillage à fréquence variable, même si l'on insère dans le dispositif de traitement un discriminateur pour pouvoir déplacer en fréquences le réjecteur de fréquences.

De plus, un tel réjecteur, même très sélectif, perturbe le signal GPS puisqu'il rejette une partie du signal GPS lui-même.

De même, on peut effectuer un traitement pré-corrélation en ajoutant un réjecteur numérique au filtre 6, mais comme précédemment, un tel réjecteur numérique perturbe la phase du signal GPS et donc provoque une distortion GPS.

La deuxième technique est une technique de traitement post-corrélation.

Cette technique consiste principalement à diminuer la largeur de la bande de réception d'analyse, ce qui a pour effet de diminuer le niveau de bruit. Cependant la diminution de la largeur de la bande d'analyse est limitée par la connaissance approchée des mouvements du porteur et par la dérive de la référence de temps du récepteur (effet Doppler induit).

Cette technique n'est pas non plus satisfaisante, puisqu'une bande d'analyse minimum est imposée par les phénomènes précités.

US-A-4475214 divulgue un dispositif selon le préambule de la préambule de la revendication 1 et un procédé selon le préambule de la revendication 8. WO 00/25436 concerne une technique de réjection de brouillage.

PRESENTATION DE L'INVENTION

L'invention propose de pallier au moins un des inconvénients de l'art antérieur.

Un des buts de l'invention est de proposer une technique de réjection d'un signal de brouillage qui ne nécessite pas une modification du diagramme de rayonnement de l'antenne de réception.

Un des buts de l'invention est de proposer une technique de réjection d'un signal de brouillage qui n'implique pas une altération importante de la phase du signal à traiter, ou qui nécessite une modification de la phase qui peut être facilement compensée par ailleurs.

Un des buts de l'invention est de proposer une technique de réjection d'un signal de brouillage qui n'implique pas une altération de l'amplitude du signal à traiter.

Un des buts de l'invention est de proposer une technique de réjection d'un signal de brouillage qui ne nécessite pas de réduire la largeur de la bande d'analyse du signal à traiter.

A cet effet, l'invention propose un dispositif de réjection d'un signal brouilleur dans un signal à spectre étalé selon la revendication 1.

Des modes de réalisation préférentiels sont présentés dans les revendications dépendantes de dispositifs.

L'invention concerne également un procédé mis en oeuvre par un tel dispositif.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un appareil récepteur d'un signal GPS ;
- la figure 2 représente schématiquement un mode de réalisation possible d'un dispositif de mise en oeuvre d'un procédé selon l'invention ;
- la figure 3 représente, schématiquement et plus en détail que sur la figure 2, un mode de réalisation possible d'un dispositif réjecteur selon l'invention ; et
- la figure 4 représente schématiquement un dispositif de traitement au niveau de la corrélation, pour chaque satellite servant au positionnement, un signal GPS et un signal GPS retardé.

Dans toutes les figures, les éléments similaires portent des références numériques identiques.

DESCRIPTION DETAILLEE DE L'INVENTION

Un procédé possible selon l'invention propose un traitement de pré-corrélation au niveau de la chaîne d'amplification FI d'un appareil récepteur d'un signal GPS.

La figure 2 représente schématiquement un mode de réalisation possible d'un dispositif de mise en oeuvre d'un procédé selon l'invention.

Un signal GPS brouillé arrive ainsi au niveau d'une antenne 1 avant d'être amplifié par un amplificateur RF 2. La fréquence du signal est baissée au niveau d'un mélangeur 3. Le signal est ensuite introduit dans un amplificateur de fréquences intermédiaires FI référencé par 4.

Un procédé selon l'invention s'applique au niveau de l'amplificateur 4, puis le signal est introduit dans un convertisseur analogique/numérique 5 pour suivre la suite d'un traitement à travers la chaîne d'un appareil comme représenté en figure 1.

Dans l'amplificateur 4, on place tout d'abord un dispositif d'amplification 41 des fréquences intermédiaires issues du mélangeur 3. Les signaux amplifiés sont ensuite fournis à un dispositif 42.

Lors de sa mise en oeuvre dans le dispositif 42, un procédé possible prévoit dans un premier temps de diviser en deux signaux, grâce à un diviseur 421, le signal GPS brouillé à traiter et issu du dispositif 41.

Dans un second temps, on introduit un décalage entre les deux signaux brouillés.

Ainsi, après le diviseur 421, un signal se propage dans des moyens 422 servant de voie de référence et indiqués par « voie 0° » sur la figure 2. L'autre signal se propage dans des moyens de décalage 424 et 425, référencés par « voie 180° » sur la figure 2. Les moyens 424 et 425 introduisent, en combinaison et pour le signal de brouillage se propageant dans la voie 180°, un déphasage de 180° par rapport au signal de brouillage se propageant dans la voie 0°.

Lors d'un troisième temps, après leur propagation respective dans la voie 0° et la voie 180°, les deux signaux sont sommés dans un sommateur 423 avant d'être introduits dans le convertisseur 5. Le traitement se poursuit alors dans des moyens sensiblement identiques à ceux représentés sur la figure 1.

Dans la suite de la présente description, on appelle « retard » (noté τ) le retard introduit par des moyens retardateurs 424 et « déphasage complémentaire » (noté Φ) le déphasage introduit par les moyens déphaseurs 425 en plus du retard τ lui-même introduit par les moyens retardateurs 424. Le déphasage complémentaire est fixé pour que le déphasage total entre les deux voies au niveau du sommateur 423 soit de 180° pour le signal de brouillage.

Le retard τ introduit par les moyens 424 dans la voie 180° entre les deux signaux est choisi notamment de sorte que les deux signaux de brouillage soient sommés l'un à l'autre en opposition de phase et s'annulent dans le sommateur 423. Dans ce cas, on obtient après sommation dans le sommateur 423 deux signaux GPS identiques à un retard τ près, sans le signal de brouillage.

Les deux signaux sont alors introduits dans le convertisseur 5 pour la suite du traitement GPS. La phase entre les deux signaux GPS est ensuite compensée lors du traitement réalisé par les moyens 8 de la figure 1.

On voit donc bien qu'on a réalisé une fonction « réjecteur », puisque le signal brouilleur a disparu lors de la sommation dans le sommateur 423. Cependant, les deux signaux GPS sont inchangés, ils ont juste été dupliqués, décalés d'un retard τ l'un par rapport à l'autre, puis ils ont été réunis dans le sommateur 423.

Si le retard τ introduit entre les deux signaux par les moyens 424 est suffisant, c'est à dire supérieur à la durée d'une bribe (également appelée « chip » en anglais), les moyens de traitement peuvent ensuite traiter les signaux GPS indépendamment l'un de l'autre dans la suite de la chaîne de traitement, et notamment dans le corrélateur 7. En effet, puisque le retard τ est supérieur à la durée d'une bribe, les deux signaux sont pratiquement décorrélés et donnent un résultat très faible lors d'une auto-corrélation ou intercorrélation. Il n'y a donc pas de perturbation sensible de la mesure par une quelconque auto-corrélation ou intercorrélation des deux signaux GPS retardés.

On comprend que pour réaliser la condition d'opposition de phase pour le signal parasite ou brouilleur, compte tenu du retard τ introduit par les moyens retardateurs 424, un déphasage complémentaire Φ doit être ajouté dans la voie 180° par les moyens déphaseurs 425. Le déphasage complémentaire Φ doit respecter la condition suivante.

$$(1)\quad \Phi = 2\pi.F_p.\tau - \pi \quad [2\pi]$$

où

Fp est la fréquence du signal parasite à éliminer, et τ est le retard introduit.

Avantageusement, un discriminateur 426 est ajouté au dispositif 42, en parallèle à la voie 180°. Le discriminateur 426 commande les moyens 425 pour maintenir la condition d'opposition de phase si la fréquence du parasite ou du brouilleur bouge. Le déphasage complémentaire Φ est donc modifié en même temps que la fréquence du brouilleur, de sorte que la relation (1) soit toujours vérifiée.

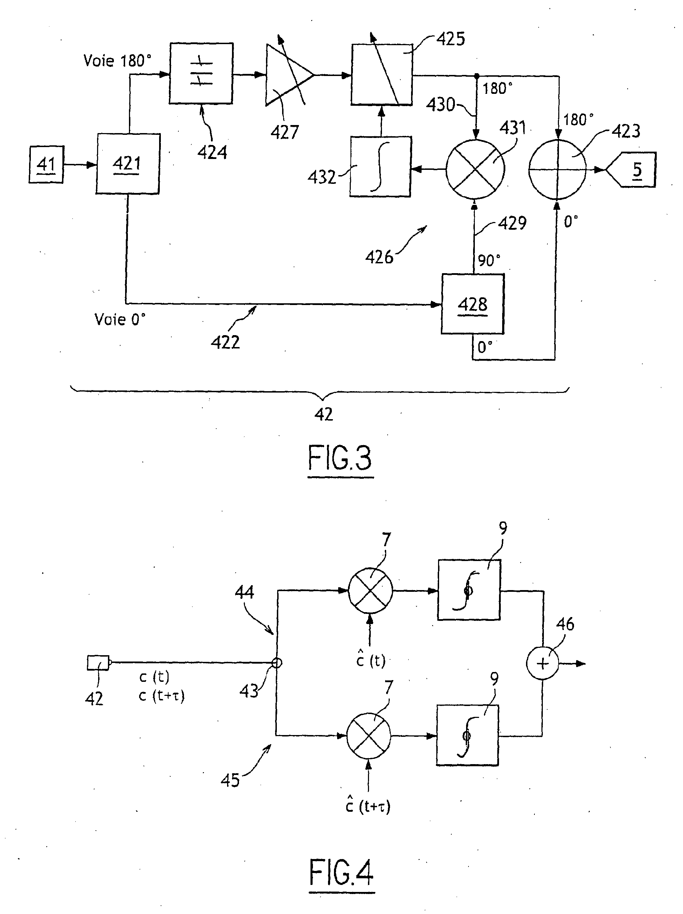

La figure 3 représente, schématiquement et plus en détail que sur la figure 2, un mode de réalisation possible d'un dispositif réjecteur 42 selon l'invention.

Dans la voie 180°, un filtre d'onde acoustique de surface 424 ou « Surface Acoustic Wave (SAW) » réalise la fonction ligne à retard pour introduire le retard τ. De tels filtres sont connus de l'homme du métier. Ils utilisent généralement la technique piézo-électrique et permettent d'introduire un retard relativement important grâce à un composant de petite taille. Bien entendu, d'autres moyens d'introduction de retard peuvent être employés.

Un amplificateur variable 427 branché en sortie du filtre 424 permet de maintenir une condition d'équilibrage d'amplitude entre les signaux GPS dans les deux voies. Il faut en effet que les deux signaux présentent une égalité d'amplitude de l'ordre de 1 dB lors de leur sommation dans le sommateur 423.

Un déphaseur 425 permet d'introduire le déphasage Φ. Le déphaseur est branché en sortie de l'amplificateur variable 427 et en entrée du sommateur 423.

Le déphaseur 425 est inséré de plus dans une boucle de phase 426. La boucle de phase 426 permet de maintenir la condition d'opposition de phase entre les deux voies. Elle permet donc de suivre, éventuellement, une variation de la fréquence de l'interférence (dans la bande passante de la boucle).

Pour réaliser la boucle de phase 426, on place un diviseur 428 dans la voie 0° entre le diviseur 421 et le sommateur 423. Un signal issu du diviseur 428 n'allant pas vers le sommateur 423 est référencé par 429

De plus, on place dans la boucle 426 un comparateur 431 de phase, le comparateur 431 se branchant en dérivation de la sortie du déphaseur 425. Le signal en entrée du comparateur 431 issu du déphaseur 425 est référencé par 430.

Le signal 429 issu du diviseur 428 est également branché en entrée du comparateur 431.

Le comparateur 431 permet de maintenir un déphasage de 90° entre son signal de référence 429 et le signal 430 qui sort du déphaseur 425.

Un intégrateur 432 est branché en sortie du comparateur 431 et en entrée du déphaseur 425, afin de matérialiser une boucle de retour vers déphaseur 425.

Le signal sortant du déphaseur 425 est ainsi déphasé de 180° par rapport au signal dans la voie 0°. Le déphasage de 180° des deux voies doit être réalisé à 2 ou 3° près avant la sommation dans le sommateur 423.

Le dispositif de la figure 3 fait que l'on obtient, au niveau du sommateur 423, pour le signal brouilleur, deux signaux d'égales amplitudes à 1 dB près mais en opposition de phase à 2 ou 3° près.

En sortie du sommateur 423, on trouve un signal brouilleur atténué, la profondeur de cette atténuation étant fonction de la précision dans la réalisation des conditions d'opposition de phase et d'équilibrage d'amplitude.

Les développements qui suivent s'attachent à une amélioration du traitement GPS. On se situe alors après le réjecteur 42 décrit ci-dessus, avant ou après le convertisseur 5 et/ou le filtre 6 de la figure 1.

En sortie du réjecteur 42, on trouve les signaux suivants :

- du bruit thermique de densité spectrale N0,
- le brouilleur atténué,
- les signaux GPS de puissance C/2, C représentant la puissance totale du signal au niveau en sortie de l'amplificateur FI 41.
- les signaux GPS de puissance C/2 retardés de τ.

Si on ne traite que les signaux GPS et non pas les signaux GPS retardés, et en supposant que le niveau de brouilleur est inférieur à celui du bruit thermique, on obtient en sortie du réjecteur 42 un rapport signal/bruit de C/(2No). Le rapport signal/bruit est donc diminué d'un facteur 2 par rapport au cas non brouillé.

Pour éviter cette dégradation, on peut traiter au niveau de la corrélation, pour chaque satellite servant au positionnement, le signal GPS et le signal GPS retardé.

Un tel dispositif de traitement est représenté schématiquement sur la figure 4.

On voit ainsi que la sortie du réjecteur 42, éventuellement par l'intermédiaire du convertisseur 5 et/ou du filtre numérique 6, est reliée à un diviseur 43 divisant le signal en deux signaux dans des branches 44 et 45.

Chaque branche 44 et 45 comporte un corrélateur 7 de désétalement. Le corrélateur 7 de la branche 44 établit une corrélation entre les signaux GPS se propageant dans ladite branche 44 et un signal GPS estimé connu de l'appareil noté $\hat{C}(t)$. Le corrélateur 7 de la branche 45 établit quant à lui une corrélation entre ies signaux GPS se propageant dans ladite branche 45 et un signal GPS estimé retardé connu de l'appareil noté $\hat{C}(t+\tau)$.

Les sorties de chaque corrélateur 7 sont ensuite branchées en entrée d'intégrateurs 9 avant d'être sommées entre elles dans un sommateur 46.

La sortie du sommateur est 46 ensuite envoyée vers un traitement classique GPS.

Effectuer une corrélation sur les signaux GPS et les signaux GPS retardés fait que le rapport signal sur bruit est de C/NO en sortie du sommateur 46. On se retrouve donc dans le cas non brouillé.

Un procédé et un dispositif selon l'invention ont de nombreux avantages.

Une technique selon l'invention apporte notamment une réjection de l'ordre de 20 dB des signaux parasites à bande étroite, sans perturber notablement les signaux GPS, ni en phase ni en amplitude.

De plus, une technique selon l'invention permet une meilleure protection de l'appareil contre le brouillage « à l'accrochage » au référentiel GPS, tout en assurant également une meilleure tenue au brouillage lors de la navigation de l'appareil.

Enfin, l'utilisation conjointe des corrélations sur les signaux GPS et GPS retardés permet d'obtenir une corrélation équivalente surun signal GPS ayant un rapport signal/bruit proche de celui d'un signal GPS non brouillé.

**Revendications**

1. Dispositif de réjection d'un signal brouilleur dans un signal à spectre étalé sous forme d'une succession du bribes comportant des moyens diviseurs (421) aptes à diviser le signal brouillé en deux signaux se propageant chacun dans une voie différente, des moyens de décalage (424, 425) situés dans une des deux voies et aptes à retarder et à déphaser le signal se propageant dans ladite voie par rapport à l'autre signal et des moyens sommateurs (423) aptes à sommer les signaux des deux voies, les moyens de décalage (424, 425) étant aptes à fixer le retard à une durée supérieure à la duré d'une bribe et à fixer déphasage entre les signaux des deux voies de sorte que les signaux brouilleurs soient en opposition de phase lors de leur sommation dans les moyens sommateurs (423), **caractérisé en ce que** le dispositif comporte en outre un discriminateur (426) apte à commander les moyens de décalage (424, 425) et apte à faire varier le déphasage entre les signaux des deux voies en fonction de la fréquence du signal brouilleur, le discriminateur (426) comportent un comparateur de phase (431) dont les entrées (429, 430) sont reliées aux deux voies et dont la sortie est reliée aux moyens de décalage (424, 425) par l'intermédiaire d'un intégrateur (432).

2. Dispositif selon la revendication 1, **caractérisé en ce que** les moyens de décalage (424, 425) comportent des moyens retardateurs (424) aptes à introduire un retard ($\tau$) et des moyens déphaseurs (425) aptes à introduire un déphasage ($\varphi$) dans le signal se propageant dans la voie dans laquelle ils sont placés.

3. Dispositif selon la revendication 2, **caractérisé en ce que** les moyens retardateurs (424) comportent un filtre d'onde acoustique de surface.

4. Dispositif selon l'une des revendications 2 ou 3, **caractérisé en ce que** les moyens déphaseurs (425) comportent un déphaseur variable.

5. Dispositif selon l'une des revendications 1 à 4, **caractérisé en ce qu'**il comporte un amplificateur variable (427) apte à maintenir une condition d'équilibrage d'amplitude entre les signaux dans les deux voies.

6. Dispositif selon l'une des revendications 1 à 5, **caractérisé en ce qu'**il comporte des moyens (43, 44, 45, 7, 46) aptes à effectuer une corrélation sur les signaux et les signaux retardés respectivement.

7. Appareil de positionnement compatible avec un système mondial de positionnement (GPS), **caractérisé en ce qu'**il comporte un dispositif selon l'une des revendications 1 à 6.

8. Procédé de réjection d'un signal brouilleur dans un signal à spectre étalé sous forme d'une succession de bribes, comportant les étapes consistant à :

   - diviser dans des moyens diviseur (421) le signal brouillé en deux signaux se propageant chacun dans une voie différente ;
   - retarder et déphaser un signal se propageant dans une voie par rapport à l'autre signal grâce à des moyens (424, 425) de décalage ; et
   - sommer les signaux des deux voies dans des moyens sommateurs (423) ;

   le retard étant fixé à une durée supérieure à la durée d'une bribe
   le déphasage entre les signaux des deux voies étant fixé de sorte que les signaux brouilleurs soient en opposition de phase lors de leur sommation, **caractérisé en ce qu'**il comporte une étape consistant à commander les moyens de décalage (424, 425) et à faire varier le déphasage entre les signaux des deux voies en fonction de la fréquence du signal brouilleur grâce à un discriminateur (426) comportant un comparateur de phase (431) dont les entrées (429, 430) sont reliées aux deux voies et dont la sortie est reliée aux moyens de décalage (424, 425) par l'intermédiaire d'un intégrateur (432).

9. Procédé selon la revendication 8, **caractérisé en ce qu'**il comporte les étapes consistant à déphaser les signaux l'un par rapport à l'autre en introduisant, dans une des deux voies, un retard ($\tau$) grâce à des moyens retardateurs (424) et un déphasage ($\Phi$) grâce à des moyens déphaseurs (425).

10. Procédé selon la revendication 9, **caractérisé en ce qu'**il comporte une étape consistant à fixer le déphasage ($\Phi$) des moyens déphaseurs (425) de sorte qu'il vérifie

$$\Phi = 2.\pi.F_p.\tau - \pi \qquad [2.\pi]$$

où Fp est la fréquence du signal brouilleur à éliminer, et $\tau$ est le retard introduit par les moyens retardateurs (424).

11. Procédé selon l'une des revendications 9 ou 10, **caractérisé en ce qu'**il comporte une étape consistant à faire varier le déphasage ($\Phi$) entre les signaux des deux voies en fonction de la fréquence du signal brouilleur grâce à un discriminateur (426).

12. Procédé selon l'une des revendications 9 à 11, **caractérisé en ce qu'**il comporte une étape consistant à maintenir une condition d'équilibrage d'amplitude entre les signaux dans les deux voies grâce à des moyens (427) d'amplification variable.

13. Procédé selon l'une des revendications 9 à 12, **caractérisé en ce qu'**il comporte une étape consistant à effectuer une combinaison des corrélation sur les signaux et les signaux retardés respectivement grâce à des moyens de corrélation (7).

14. Procédé selon l'une des revendications 9 à 13, **caractérisé en ce qu'**il comporte une étape consistant à traiter des signaux brouillés compatibles avec un système mondial de positionnement (GPS).

## Claims

1. Device for rejecting a scrambling signal in a spread spectrum signal in the form of a succession of chips comprising splitting means (421) suitable for splitting the scrambled signal into two signals each propagated in a different channel, shifting means (424, 425) situated in one of the two channels and suitable for delaying and phase-shifting the signal propagated in said channel with respect to the other signal and summing means (423) suitable for summing the signals of both channels, the shifting means (424, 425) being suitable for setting the delay to a time greater than the chip time and setting the phase-shift between the signals of both channels such that the scrambling signals are in antiphase during the summing thereof in the summing means (423), **characterised in that** the device further comprises a discriminator (426) suitable for controlling the shifting means (424, 425) and suitable for varying the phase-shift between the signals of both channels as a function of the frequency of the scrambling signal, the discriminator (426) comprising a phase comparator (431) wherein the inputs (429, 430) are connected to both channels and wherein the output is connected to the shifting means (424, 425) via an integrator (432).

2. Device according to claim 1, **characterised in that** the shifting means (424, 425) comprise delaying means (424) suitable for introducing a delay ($\tau$) and phase-shifting means (425) suitable for introducing a phase-shift ($\Phi$) in the signal propagated in the channel wherein they are placed.

3. Device according to claim 2, **characterised in that** the delaying means (424) comprise a surface acoustic wave filter.

4. Device according to any of claims 2 or 3, **characterised in that** the phase-shifting means (425) comprise a variable phase-shifter.

5. Device according to any of claims 1 to 4, **characterised in that** it comprises a variable amplifier (427) suitable for maintaining an amplitude balancing condition between the signals in both channels.

6. Device according to any of claims 1 to 5, **characterised in that** is comprises means (43, 44, 45, 7, 46) suitable for carrying out a correlation on the signals and the delayed signals, respectively.

7. Positioning apparatus compatible with a global positioning system (GPS), **characterised in that** it comprises a device according to any of claims 1 to 6.

8. Method for rejecting a scrambling signal in a spread spectrum signal in the form of a succession of chips comprising steps consisting of:

> - splitting the scrambled signal in splitting means (421) into two signals propagated in a different channel;
> - delaying and phase-shifting a signal propagated in a channel with respect to the other signal using shifting means (424, 425); and
> - summing the signals of both channels in summing means (423);

the delay being set to a time greater than the chip time and the phase-shift between the signals of both channels being set such that the scrambling signals are in antiphase during the summing thereof, **characterised in that** it comprises a step consisting of controlling the shifting means (424, 425) and varying the phase-shift between the signals of both channels as a function of the frequency of the scrambling signal by means of a discriminator (426) comprising a phase comparator (431) wherein the inputs (429, 430) are connected to both channels and wherein the output is connected to the shifting means (424, 425) via an integrator (432).

9. Method according to claim 8, **characterised in that** it comprises the steps consisting of phase-shifting the signals with respect to each other by introducing, in one of the two channels, a delay ($\tau$) by means of delaying means (424) and a phase-shift ($\varphi$) by means of phase-shifting means (425).

10. Method according to claim 9, **characterised in that** it comprises a step consisting of setting the phase-shift ($\Phi$) of the phase-shifting means (425) such that it verifies

$$\Phi = 2.\pi.F_p.\tau - \pi \quad [2\pi]$$

where Fp is the frequency of the scrambling signal to be removed and i is the delay introduced by the delaying means (424).

**11.** Method according to any of claims 9 or 10, **characterised in that** it comprises a step consisting of varying the phase-shift (Φ) between the signals of both channels as a function of the frequency of the scrambling signal by means of a discriminator (426).

**12.** Method according to any of claims 9 to 11, **characterised in that** it comprises a step consisting of maintaining an amplitude balancing condition between the signals in both channels by means of a variable amplification means (427).

**13.** Method according to any of claims 9 to 12, **characterised in that** it comprises a step consisting of combining the correlations on the signals and the delayed signals, respectively, by means of correlation means (7).

**14.** Method according to any of claims 9 to 13, **characterised in that** it comprises a step consisting of processing scrambled signals compatible with a global positioning system (GPS).

**Patentansprüche**

**1.** Vorrichtung zum Unterdrücken eines Störsignals in einem frequenzgespreizten Signal in Form einer Chipfolge, Folgendes umfassend: Teilermittel (421), die dafür eingerichtet sind, das gestörte Signal in zwei Signale aufzuteilen, von denen jedes sich auf einem anderen Pfad ausbreitet, Verschiebungsmittel (424, 425), die sich in einem der zwei Pfade befinden und die dafür eingerichtet sind, das Signal, das sich in diesem Pfad ausbreitet, relativ zum anderen Signal zu verzögern und in der Phase zu verschieben, und Summierungsmittel (423), die dafür eingerichtet sind, die Signale der beiden Pfade zu summieren, wobei die Verschiebungsmittel (424, 425) dafür eingerichtet sind, die Verzögerung auf eine Dauer festzulegen, die größer als die Dauer eines Chips ist, und die Phasenverschiebung zwischen den Signalen der beiden Pfade derart festzulegen, dass die Störsignale bei ihrem Summieren in den Summierungsmitteln (423) in Phasenopposition stehen, **dadurch gekennzeichnet, dass** die Vorrichtung außerdem einen Diskriminator (426) umfasst, der dafür eingerichtet ist, die Verschiebungsmittel (424, 425) zu steuern und dafür eingerichtet ist, die Phasenverschiebung zwischen den Signalen der beiden Pfade in Abhängigkeit von der Frequenz des Störsignals zu verändern, wobei der Diskriminator (426) einen Phasenkomparator (431) umfasst, dessen Eingänge (429, 430) mit den beiden Pfaden verbunden sind und dessen Ausgang über ein Integrationsglied (432) mit den Verschiebungsmitteln (424, 425) verbunden ist.

**2.** Vorrichtung nach Anspruch 1, **dadurch gekennzeichnet, dass** die Verschiebungsmittel (424, 425) Folgendes umfassen: Verzögerungsmittel (424), die dafür eingerichtet sind, eine Verzögerung (τ) einzuführen, und Phasenverschiebungsmittel (425), die dafür eingerichtet sind, eine Phasenverschiebung (Φ) einzuführen, und dies in dem Signal, das sich in dem Pfad ausbreitet, in dem sie angeordnet sind.

**3.** Vorrichtung nach Anspruch 2, **dadurch gekennzeichnet, dass** die Verzögerungsmittel (424) ein Oberflächenwellenfilter umfassen.

**4.** Vorrichtung nach einem der Ansprüche 2 oder 3, **dadurch gekennzeichnet, dass** die Phasenverschiebungsmittel (425) einen einstellbaren Phasenschieber umfassen.

**5.** Vorrichtung nach einem der Ansprüche 1 bis 4, **dadurch gekennzeichnet, dass** sie einen einstellbaren Verstärker (427) umfasst, der dafür eingerichtet ist, zwischen den Signalen auf den beiden Pfaden eine Amplitudengleichgewichtsbedingung einzuhalten.

**6.** Vorrichtung nach einem der Ansprüche 1 bis 5, **dadurch gekennzeichnet, dass** sie Mittel (43, 44, 45, 7, 46) umfasst, die dafür eingerichtet sind, auf den Signalen bzw. den verzögerten Signalen eine Korrelation auszuführen.

**7.** Positionsbestimmungsvorrichtung, die mit einem Global-Positioning-System (GPS) kompatibel ist, **dadurch gekennzeichnet, dass** sie eine Vorrichtung nach einem der Ansprüche 1 bis 6 umfasst.

**8.** Verfahren zum Unterdrücken eines Störsignals in einem frequenzgespreizten Signal in Form einer Chipfolge, das die Schritte umfasst, die aus Folgendem bestehen:

- Teilen des gestörten Signals in Teilermitteln (421) in zwei Signale, von denen jedes sich auf einem anderen Pfad ausbreitet;
- Verzögern und Verschieben in der Phase eines Signals, das sich auf einem Pfad ausbreitet, und dies relativ zum anderen Signal und mittels Verschiebungsmitteln (424, 425); und
- Summieren der Signale der beiden Pfade in Summierungsmitteln (423);

wobei die Verzögerung auf eine Dauer festgelegt ist, die größer als die Dauer eines Chips ist, und wobei die Phasenverschiebung zwischen den Signalen der beiden Pfade derart festgelegt ist, dass die Störsignale bei ihrem Summieren in Phasenopposition stehen, **dadurch gekennzeichnet, dass** es einen Schritt umfasst, der darin besteht, die Verschiebungsmittel (424, 425) zu steuern und die Phasenverschiebung zwischen den Signalen der beiden Pfade in Abhängigkeit von der Frequenz des Störsignals zu verändern, und dies mittels eines Diskriminators (426), der einen Phasenkomparator (431) umfasst, dessen Eingänge (429, 430) mit den beiden Pfaden verbunden sind und dessen Ausgang über ein Integrationsglied (432) mit den Verschiebungsmitteln (424, 425) verbunden ist.

9. Vorrichtung nach Anspruch 8, **dadurch gekennzeichnet, dass** sie Schritte umfasst, die darin bestehen, die Signale gegeneinander in der Phase zu verschieben, indem in einem der Pfade mittels Verzögerungsmitteln (424) eine Verzögerung ($\tau$) und mittels Phasenverschiebungsmitteln (425) eine Phasenverschiebung ($\Phi$) eingeführt wird.

10. Vorrichtung nach Anspruch 9, **dadurch gekennzeichnet, dass** sie einen Schritt umfasst, der darin besteht, die Phasenverschiebung ($\Phi$) der Phasenverschiebungsmittel (425) so festzulegen, dass Folgendes erfüllt wird:

$$\Phi = 2 \cdot \pi \cdot F_p \cdot \tau - \pi \qquad [2 \cdot \pi]$$

wobei $F_p$ die Frequenz des zu beseitigenden Störsignals und $\tau$ die Verzögerung ist, die durch die Verzögerungsmittel (424) eingeführt wird.

11. Vorrichtung nach einem der Ansprüche 9 oder 10, **dadurch gekennzeichnet, dass** sie einen Schritt umfasst, der darin besteht, mittels eines Diskriminators (426) die Phasenverschiebung ($\Phi$) zwischen den Signalen der beiden Pfade in Abhängigkeit von der Frequenz des Störsignals einzustellen.

12. Vorrichtung nach einem der Ansprüche 9 bis 11, **dadurch gekennzeichnet, dass** sie einen Schritt umfasst, der darin besteht, mittels einstellbaren Verstärkungsmitteln (427) zwischen den Signalen auf den beiden Pfaden eine Amplitudengleichgewichtsbedingung einzuhalten.

13. Vorrichtung nach einem der Ansprüche 9 bis 12, **dadurch gekennzeichnet, dass** sie einen Schritt umfasst, der darin besteht, mittels Korrelationsmitteln (7) eine Kombination der Korrelationen auf den Signalen bzw. den verzögerten Signalen auszuführen.

14. Vorrichtung nach einem der Ansprüche 9 bis 13, **dadurch gekennzeichnet, dass** sie einen Schritt umfasst, der darin besteht, gestörte Signale zu verarbeiten, die mit einem Global-Positioning-System (GPS) kompatibel sind.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4475214 A

- WO 0025436 A